# EUROPEAN PATENT APPLICATION

(11) **EP 2 746 943 A1**
(43) Date of publication of application: **25.06.2014**
(21) Application number: 12824609.7
(22) Date of filing: 08.03.2012
(51) Int. Cl.: G06F 9/50, G06F 9/46, G06F 9/48

(54) **VIRTUAL SERVER CONTROL SYSTEM AND PROGRAM**

(30) Priority: 15.08.2011 JP 2011177518
(71) Applicant: Hitachi Systems, Ltd., Tokyo 141-8672 (JP)
(72) Inventor: TAMURA, Mineyuki, Tokyo 141-8672 (JP)
(74) Representative: Renard, Alexis
(86) International application number: PCT/JP2012/055920
(87) International publication number: WO 2013/024601

(57) **Abstract**

In relation to scale control of virtual servers and others in a target system such as a public cloud, techniques capable of ensuring sufficient effects in processing efficiency and load dispersion and operability of systems and services are provided. The present system has a function of carrying out scale control of the virtual servers (21) of the target system (2), and it is provided with: a processing unit (14) which sets calendar information (51) of a client company utilizing the target system (2) and definition information (52) for generating an actual schedule for the scale control; a processing unit (11) which carries out a scheduling process of generating actual schedule information (53) for the scale control with reference to the set information (51, 52); and a processing unit (12) which carries out a process of transmitting an instruction of the scale control to the virtual servers (21) at time/date timing in accordance with the actual schedule information (53).

## Description

### TECHNICAL FIELD

The present invention relates to an information processing system (virtual server control system) or the like that controls virtual servers (or virtual machines) operated in a target system such as a public cloud, and particularly relates to techniques of controlling the scale (for example, the number) of the virtual servers.

### BACKGROUND ART

Conventionally, as the techniques of controlling the scale (for example, the number) of virtual servers (or virtual machines) operated in a target system such as a public cloud, a method of dynamically controlling the scale based on the loads of the servers (so-called scale-out/scale-in) has been mainly used. In this method, as an example of control, the loads of physical servers and virtual servers are occasionally determined by a monitoring server or the like, the number of the operated virtual servers (instances) is increased (scale out) when the loads have been increased (for example, when exceeding a threshold value), and the number of the operated virtual servers is decreased (scale in) when the loads have been decreased (for example, when below the threshold value). In this manner, processing performance and others are controlled.

Examples of conventional techniques relating to the method mentioned above include Japanese Patent Application Laid-Open Publication No. 2011-118525 (Patent Document 1). In Patent Document 1, an example of dynamic scale control is described. In this method, the loads of physical servers and virtual servers are collected, and when the load of a management target is deviated from a threshold value, the change in the load is predicted based on a past load variation history, and the server control is carried out in accordance with the results thereof.

### PRIOR ART DOCUMENTS

### PATENT DOCUMENTS

Patent Document 1: Japanese Patent Application Laid-Open Publication No. 2011-118525

### SUMMARY OF THE INVENTION

### PROBLEMS TO BE SOLVED BY THE INVENTION

The above-mentioned conventional techniques of the dynamic scale control for a target system such as a public cloud and virtual servers thereof have following problems in terms of effects and operability.

In the conventional control of the target system, for example, even when execution of scale-in (decrease) or scale-out (increase) of the virtual servers (instances) is dynamically determined based on load information, the state thereof cannot be immediately realized. For example, a certain period of time is required until an instruction is given to activate one or more virtual servers for scale-out (increase) of certain virtual servers and a state in which service process is executable (activation completed state) is obtained in the virtual servers. This time (activation time) is different depending on the system environment and others and takes, for example, 15 minutes to 30 minutes. Due to the time lag (delay) corresponding to the activation time, sufficient effects are not exerted for processing efficiency, load dispersion, and others of the target system such as the public cloud, and the operability thereof is sometimes low.

In particular, in a case in which a client company utilizes a public cloud (and service processes thereof) to realize business processes and others, efficiency of the business processes and others is sometimes deteriorated due to the influence caused by the above-described dynamic scale control and the activation time. For example, the scale of the virtual servers is not well adjusted due to the above-described influence around the opening time of the client company, and the business processes become slow and heavy in some cases. As a result, the operability of systems/services including the above-described dynamic scale control is sometimes low.

In view of the circumstances mentioned above, a main object of the present invention is to provide techniques capable of ensuring sufficient effects in processing efficiency, load dispersion, and others and operability of systems/services in relation to scale control of virtual servers and the like in a target system such as a public cloud.

### MEANS FOR SOLVING THE PROBLEMS

In order to achieve the above-described object, a typical embodiment of the present invention is an information processing system (virtual server control system) which controls virtual servers and others operated in a target system such as a public cloud, in particular, a system or the like which carries out scale control of the virtual servers and others, and is characterized by having the configurations described below.

The system of the present embodiment is provided with, as a function of carrying out the scale control of virtual servers, a first processing unit that carries out a process of setting calendar information of a client company, which utilizes a target system, by a setter and a process of setting definition information for generating an actual schedule for scale control of the virtual servers by the setter, a second processing unit that carries out a scheduling process of generating actual schedule information for the scale control of the virtual servers with reference to the calendar information and the definition information, a third processing unit that carries out a process of transmitting an instruction of the scale control to the virtual servers of the target system at specified time/date timing in accordance with a description of the actual schedule information, and a fourth processing unit that monitors a working and a state of the virtual servers of the target system and records monitoring information. For example, the calendar information includes information of business days and non-business days of the client company. The definition information includes information of target virtual servers, time/date definition, and the number of the virtual servers of the scale control. The actual schedule information includes information of time and date, the target virtual servers, and the number of the virtual servers of the scale control.

The execution of the system of the present embodiment is based on the static scale control of the virtual servers of the target system (controls the number of the virtual servers at specific time and date) (third processing unit). In order to generate a schedule of the static scale control, means (first processing unit) with which the calendar information and the definition information are set by the setter is provided. Means (second processing unit) which executes a scheduling process of generating a schedule of the static scale control based on the calendar information and the definition information is provided.

### EFFECTS OF THE INVENTION

According to the typical embodiment of the present invention, it is possible to ensure sufficient effects in processing efficiency and load dispersion and operability of systems and services in relation to scale control of virtual servers and the like in a target system such as a public cloud.

### BRIEF DESCRIPTIONS OF THE DRAWINGS

FIG. 1 is a drawing showing an overall configuration of a system (virtual server control system) of an embodiment of the present invention;
FIG. 2 is a drawing showing a processing sequence among elements in the system of the present embodiment;
FIG. 3 is a drawing showing an example of client company calendar information;
FIG. 4 is a drawing showing an example of schedule definition information; and
FIG. 5 is a drawing showing an example of actual schedule information.

### DESCRIPTIONS OF THE PREFERRED EMBODIMENTS

Hereinafter, embodiments of the present invention will be described in detail with reference to the accompanying drawings. Note that components having the same function are denoted by the same reference symbols in principle throughout the drawings for describing the embodiments, and the repetitive description thereof will be omitted.

### [System]

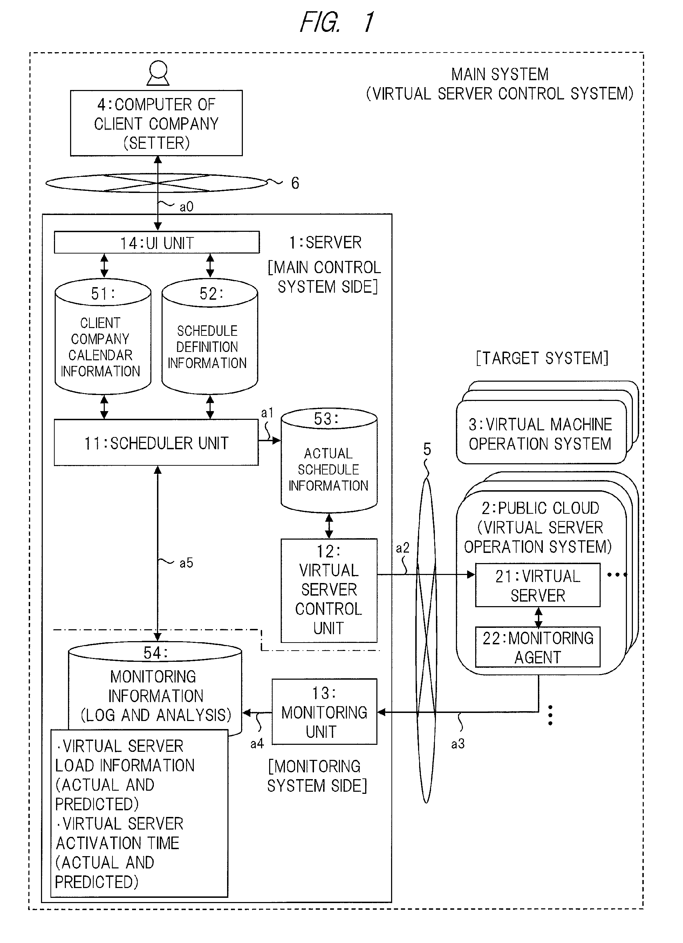

FIG. 1 shows an overall configuration of a system (virtual server control system) of an embodiment of the present invention. The entirety of this system has: a server 1 which constitutes a main control system; a public cloud 2 (virtual server operation system) and a virtual machine operation system 3 which are target systems; and a computer 4 of a client company (setter) which utilizes the target systems (or a client company system), and these are mutually connected by networks (5, 6) such as the Internet. The target systems (2, 3) and the client company (client company system) may be plural in number.

In the present embodiment, the server 1 is provided in the client company system, which includes the computer 4 of the client company (setter), as a constituent element thereof, and they are connected by the network 5 such as a LAN. Also, in the use of the computer 4, a person responsible of a client company (for example, a system administrator) serves as a setter. Alternatively, the server 1 may be present on a network independently from the client company system. The setter who uses the computer 4 may be someone other than the person responsible of the client company, for example, a person responsible of a business operator who provides the server 1.

The server 1 has processing units including a scheduler unit 11, a virtual server control unit 12, a monitoring unit 13, and a UI (user interface) unit 14, and has data/information (corresponding storage unit) including client company calendar information 51, schedule definition information 52, actual schedule information 53, and monitoring information 54. The processing units (11 to 14) can be realized by program processing (processing by a program of the present embodiment) using publicly-known elements such as a processor and a memory of the server 1 and a communication interface.

A monitoring system part including the monitoring unit 13 and the monitoring information 54 in the server 1 may be constituted of a system (for example, a server) different from the main control system part including 11, 12, and others and be linked therewith. As the different system, for example, an existing integrated monitoring system may be utilized.

The public cloud 2 is a publicly-known information processing system, which is formed on the Internet (network 5) and provides service processes to unspecified users (including the client company system in this case) by cloud computing, and is a system in which hardware such as physical servers (not shown) and virtual servers 21 using virtualization software are operated.

The monitoring unit 13 of the server 1 monitors the working and the state of the virtual servers 21 of the target public cloud 2. For this purpose, a monitoring agent 22, which is a processing unit (realized by program processing) which monitors the working and the state of the virtual server 21, is operated in the target public cloud 2 (publicly-known technique). For example, the monitoring agent 22 is operated together with the target virtual server 21, issues monitoring information (a3) representing the working and the state of the target virtual server 21 based on monitoring setting information, and transmits the information to the monitoring unit 13 via the network 5. The monitoring information (a3) includes, for example, information representing the state of the loads and resources of the virtual servers 21 and information of the scale (for example, the number) of the virtual servers in operation. Furthermore, it is preferred to provide information of an actual value or a prediction value of activation time (T) required for activation of the virtual server 21 as the monitoring information (a3).

The virtual machine operation system 3 is a system in which virtual machines (virtual computers) are operated and is a system using, for example, VMware (software). Similarly to the public cloud 2, the virtual machine operation system 3 can be treated as a target system of the present system, and the virtual machines serve as scale control targets thereof. Hereinafter, the case in which the public cloud 2 serves as a target system will be described, but there is no difference even in the case where the virtual machine operation system 3 serves as a target system.

The processes realized by the client company (client company system) by using the public cloud 2 (service processes by the virtual servers 21 thereof) include, for example, business processes of the company and data backup processes thereof. Each client company has requirements for business processes as conditions (characteristics), and the scale of the virtual servers 21 is required in accordance with the characteristics. There are such characteristics that loads are high on particular business days of a client company, and the scale of the virtual servers 21 is required in accordance with the characteristics.

The computer 4 of the client company (setter) is a computer or an information processing system of the person responsible (setter) of the client company, which utilizes a target system such as the public cloud 2, and it utilizes the present system (server 1) via the network 6. In particular, the setter operates the computer 4 to access the UI unit 14 (for example, Web server) of the server 1 via the network 6 and sets the necessary information (51, 52) through the process (a0). As the client company calendar information 51 and the schedule definition information 52, contents corresponding to the conditions and policies of the client company (setter) can be arbitrarily set.

The scheduler unit 11 carries out a scheduling process of generating the actual schedule information 53 from the client company calendar information 51, the schedule definition information 52, and the monitoring information 54 (a1). The actual schedule information 53 is instruction information of static scale control (virtual server control). In particular, the scheduler unit 11 has a function of obtaining the load and the activation time (T) of each public cloud 2 and each virtual server 21 based on the reference of the monitoring information 54 (a5) and automatically carrying out the scheduling in consideration of them. Furthermore, as a modification example (additional function), the scheduler unit 11 predicts the number of required virtual servers with reference to the monitoring information 54 at the time of creating the actual schedule (53) and reflects that to the actual schedule (53). However, this is limited within a virtual sever range (the minimum number of virtual servers to the maximum number of the virtual servers) set by the schedule definition information 52 (described later).

The virtual server control unit 12 carries out the static scale control for the virtual servers 21 serving as targets. The virtual server control unit 12 gives an instruction of scale control to the virtual servers 21 of the target system (2) at the time and date (timing) in accordance with the actual schedule information 53 (a2) . In the present embodiment, the target system (2) has a function of controlling the scale (for example, the number) of the virtual servers 21 based on the instruction (a2) from outside, and this instruction (a2) is required only to specify the number of the virtual servers 21 to be operated or the like and is not required to instruct the activation or stop (activation termination) of the individual virtual servers 21.

The monitoring unit 13 monitors the working and the state of the virtual servers 21 of the target system (2). The monitoring unit 13 receives the monitoring information (a3) from the monitoring agent 22 and records/retains the information as the monitoring information 54 (log information) in the database (DB) (a4). Also, the monitoring unit 13 arbitrarily carries out the analysis process of the monitoring information (a3) (54) and records/retains the result thereof in the DB as the monitoring information 54 (analysis information) (a4).

The UI unit 14 is implemented by, for example, a Web server and provides setting information in a format of, for example, a Web page to the setter (4). For example, the setter can display the above-described Web page on a display screen of the computer 4 and input/edit setting information to a table therein. Alternatively, a mode in which the information (51, 52) is directly set to the server 1 or a mode in which the server 1 acquires/receives necessary information (51, 52) from the client company system side is also possible.

### [Process]

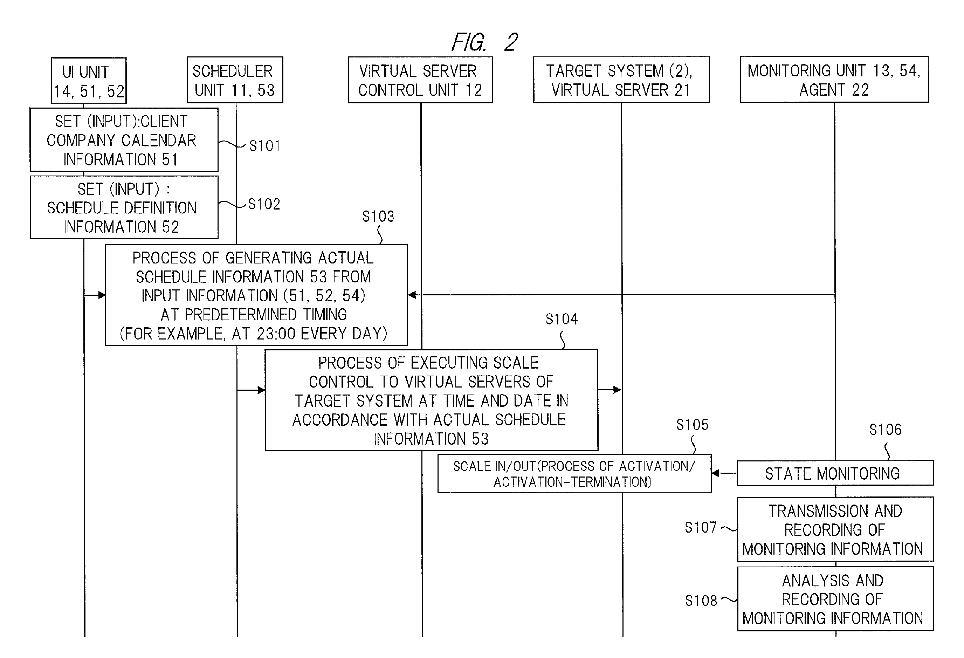

FIG. 2 shows processing sequences among the respective elements of FIG. 1 (S101 and the like represent processing steps).

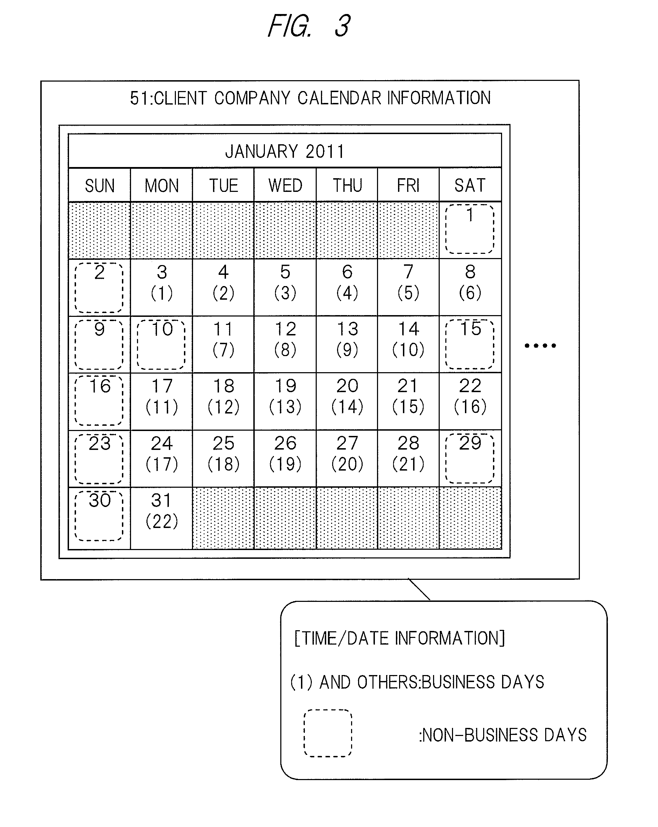

(S101) First, the setter accesses the UI unit 14 of the server 1 from the computer 4 and inputs/sets the client company calendar information 51 (specific example is FIG. 3) in advance. The contents set herein can be arbitrarily updated.

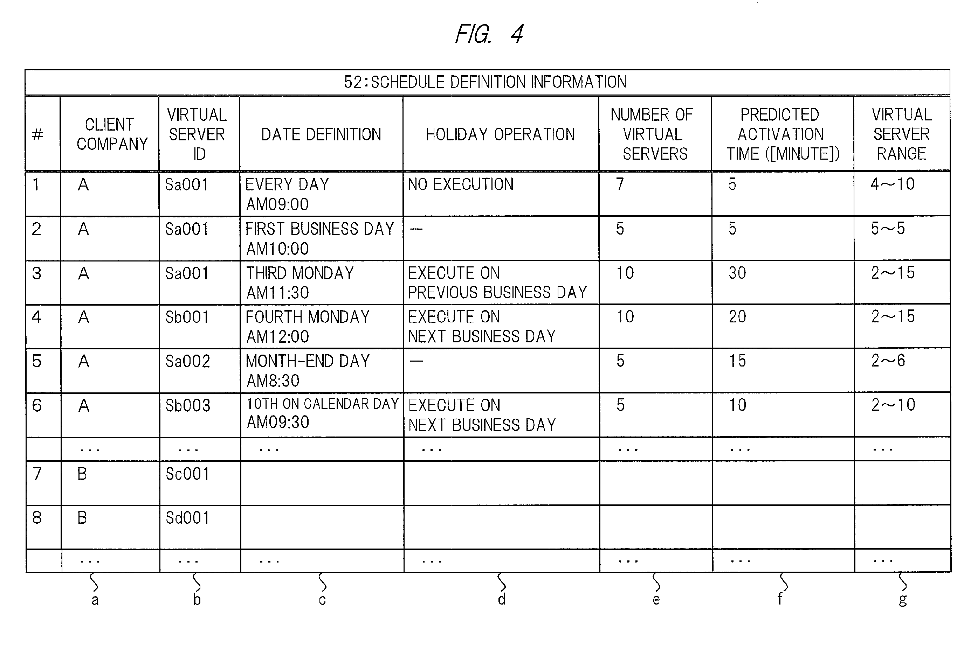

(S102) Similarly, the setter accesses the UI unit 14 of the server 1 from the computer 4 and inputs/sets the schedule definition information 52 (specific example is FIG. 4) in advance. The contents set herein can be arbitrarily updated.

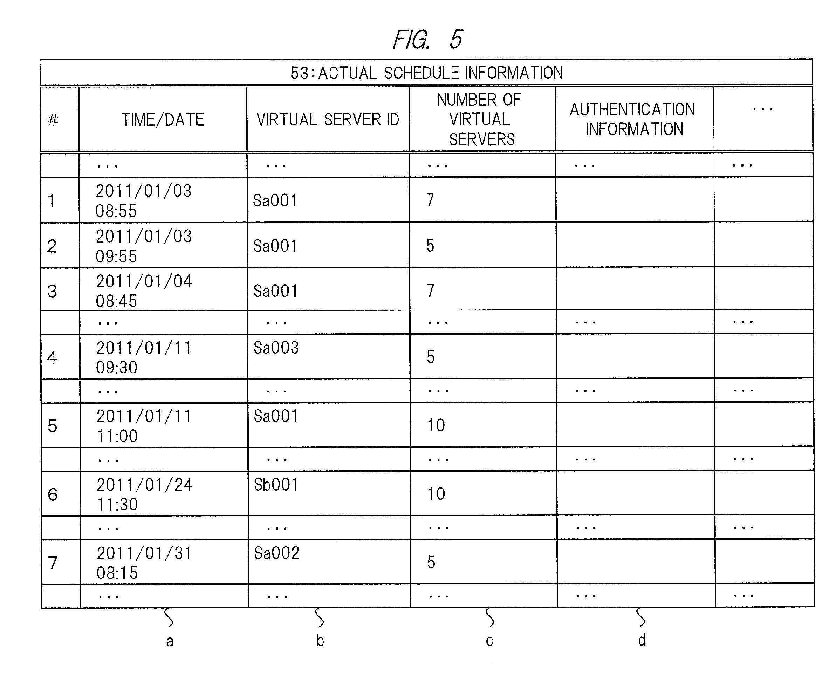

(S103) The scheduler unit 11 of the server 1 works at predetermined timing based on the setting, for example, at 23:00 every day and carries out a scheduling process of generating the actual schedule information 53 (specific example is FIG. 5) in a unit of target time (for example, next day, next week, next month and others) from input information such as the client company calendar information 51 and the schedule definition information 52 and the monitoring information 54 (if present).

(S104) The virtual server control program unit 12 of the server 1 executes the scale control to the virtual servers 21 of the target system (2) with reference to the actual schedule information 53 in accordance with the description thereof at the timing of date and time thereof. More specifically, the instruction (a2) of the scale control is transmitted from the server 1 (12) to the target system (2). The instruction (a2) includes, for example, specification of target virtual server IDs, the number of the virtual servers (scale control value) and others and necessary authentication information.

(S105) In accordance with the instruction (a2) received from the server 1 (12), the target system (2) controls (increases/decreases) the number of the virtual servers 21 and others. For example, if the number of the virtual servers specified by the instruction (a2) is larger than the number of the currently-operating virtual servers, the virtual servers 21 corresponding to the difference thereof are activated (scale out), and if it is smaller than that, the virtual servers 21 corresponding to the difference are stopped (activation termination) (scale in).

(S106) Along with S105 described above, the monitoring agent 22 monitors the working and the state including activation and stop of the virtual servers 21 and issues the change thereof as the monitoring information (a3). The monitoring information (a3) includes actual values such as the IDs, loads, resources, and the number of the virtual servers 21. Furthermore, the monitoring information is desired to include, for example, actual values of the activation time (T) of the virtual servers 21.

(S107) The monitoring agent 22 transmits the above-described monitoring information (a3) to the monitoring unit 13 of the server 1 via the network 5. The monitoring unit 13 records the received monitoring information (a3) in the DB as the monitoring information 54 (log information).

(S108) At arbitrary timing, the monitoring unit 13 carries out the analysis process of the above-described monitoring information (a3) (54) and records the result thereof in the DB as the monitoring information 54 (analysis information). The contents of the analysis process of the monitoring unit 13 include, for example, the prediction of the future loads, resources, and number based on the actual values of the loads, resources, and the number of the virtual servers 21 (storing the corresponding prediction values) and the prediction of the future activation time (T) based on the actual value of the activation time (T) of the virtual servers 21 (storing the corresponding prediction values).

The results (monitoring information 54) of above-described S107 and S108 are referenced at S103 and reflected to scheduling. Thereafter, similar processes are repeated.

### [Client Company Calendar Information]

FIG. 3 shows an example of the client company calendar information 51. For example, the information corresponding to January in the case in which the year 2011 (January to December) of a client company A is set as the target is shown. The client company calendar information 51 is basic information for generating the actual schedule (53) and is information having contents corresponding to unique characteristics of each client company. The client company calendar information 51 includes at least information of business days and non-business days of the company as unique time/date information (type information) on a general calendar. The numbers with parentheses represent business days, and broken-line frames represent non-business days. In the present example, for simplicity, two types of days are employed, and the days other than the non-business days are defined as business days (business hours are, for example, 9:00 to 17:00). For example, January 3rd is the first business day (month-beginning business day), and January 31st is the 22nd business day (month-end business day) . Other than the above-described two types of days, various days corresponding to businesses (for example, half-business days) can be set.

As the characteristics relating to the utilization of the public cloud 2 (virtual servers 21) of the company A, for example, loads (server loads) are low on non-business days, loads are intermediate on normal business days (business days except some particular business days), and loads are high on some particular business days. Examples of the some particular business days include the month-beginning business days, the month-end business days, the business day before or after a non-business day, and specified particular days (for example, days when special processes are executed). The information of the above-described particular business days can be set to the client company calendar information 51 or the schedule definition information 52 (in the present embodiment, it can be set in the form of time/date definitions to the schedule definition information 52).

The client company calendar information 51 sometimes has a plurality of types of calendar information for each client company. For example, there is a case in which calendar information different for each section is provided. In that case, a plurality of pieces of calendar information can be set.

As a modification example, the client company calendar information 51 (information of business days and non-business days) may be utilized together with relevant information. Examples thereof include business processing contents (for example, normal businesses, backup, special processes) related to business days, non-business days, and the like and information about the number of employees and entering/leaving (attendance) management of the client company. The relevant information is the information that affects loads and others of the servers (virtual servers 21) and can be utilized for the scheduling by the present system (scheduler unit 11).

### [Schedule Definition Information]

FIG. 4 shows an example (table) of the schedule definition information 52. This is a setting example corresponding to the contents of 51 of FIG. 3 (target year and month: for example, January 2011). Also, it includes setting information of a plurality of client companies (for example, A, B) (may be separated for each of the client companies). This table has, as management items (columns), (a) client company, (b) virtual server ID, (c) date definition, (d) holiday operation, (e) the number of the virtual servers, (f) predicted activation time, (g) virtual server range and others. The schedule definition information 52 is the information that sets the definition (for example, policy) for generating the actual schedule (53).

The client company of (a) is the identification information of client companies and include A, B and the like. The virtual server ID of (b) is the identification information of the virtual servers 21 serving as targets of scale control and include Sa001, Sb001 and the like.

The date definition of (c) is the definition information relating to the time and date at which the scale control is executed. Examples thereof are: "EVERY DAY AT 9 AM" in a first row (#1); "10 AM ON FIRST BUSINESS DAY" in #2; "11:30 AM ON SECOND MONDAY" in #3; "12 AM ON FOURTH MONDAY" in #4; "8:30 AM ON MONTH-END DAY" in #5; and "9:30 AM ON 10TH OF CALENDAR DAY" in #6.

The holiday operation of (d) is the information that specifies how operation/control is carried out when the date of (c) is a non-business day. Examples thereof include: "NO EXECUTION" in #1, "EXECUTE ON PREVIOUS BUSINESS DAY" in #3, and "EXECUTE ON NEXT BUSINESS DAY" in #4 (internally, these are managed by respective predetermined type information or the like). In the case of "NO EXECUTION", no scale control is carried out on the non-business day. The case of "EXECUTE ON PREVIOUS BUSINESS DAY" represents a specification that control on that date is executed on the most recent previous business day. The case of "EXECUTE ON NEXT BUSINESS DAY" represents a specification that control on that date is executed on the most recent next business day.

The number of the virtual servers of (e) is the information that specifies the number (target value) of the virtual servers 21 (instances) operated in the scale control. For example, when the instruction (a2) is transmitted while setting this value to 10, if the number of the actually operating virtual servers at that point is 7, three virtual servers are newly activated in the target system (2), and if the number of the actually operating virtual servers at that point is 15, five virtual servers are stopped (activation termination) in the target system (2).

The scale control is not limited to the mode to control the number of the virtual servers, and a mode in which other parameters such as the number of CPUs or the number of memories are controlled can be realized in the same manner.

The predicted activation time of (f) (unit is, for example, minutes) is a prediction value of the time (T) required for activation of the virtual server 21 (per one server) (the time taken from when an instruction is given until activation is completed). The mode in which this value is arbitrarily set from the computer 4 by the setter (utilizing experimental prediction value) is also possible. Alternatively, the mode in which the item value is automatically updated by, for example, the scheduler unit 11 by utilizing the actual values and prediction values stored in the monitoring information 54 in the analysis process of the monitoring unit 13 is also possible. The unit of T is not limited to minutes, and may be set by, for example, levels (short/normal/long).

The virtual server range of (g) defines the upper and lower limit values (the minimum number of the virtual servers to the maximum number of the virtual servers) of the number of the virtual servers which can be changed when dynamic scale control is added by using the scheduler unit 11 and the monitoring information 54. For example, in #1, the number of the virtual servers of (e) (static scale control target value) is 7, and the number of the virtual servers can be dynamically changed within a range from a lower limit value of 4 to an upper limit value of 10 when dynamic scale control is to be added. The value of (g) can be arbitrarily set by the setter from the computer 4. The value in the range of (g) is not limited to the number of the servers, and may be set by, for example, levels (none (fixed)/narrow/wide).

For example, a setter of the company A sets policies of scale control in accordance with the characteristics of the businesses and others of the company to the information part of the company in the schedule definition information 52 from the computer 4 through the UI unit 14. For example, target values intended to achieve a state in which activation of five target virtual servers Sa001 of the target system (2) is completed at 10 AM on the first business day of the company A are set as shown in #2 of FIG. 4. In accordance with the setting of the target values, the scheduler unit 11 then generates suitable actual schedule information 53 (schedule of suitable static scale control in consideration of server loads, predicted activation time, and others), and the virtual server control unit 12 automatically executes the static scale control.

In the setting example of FIG. 4 (target year and month: January 2011), #1 represents a target for achieving a state in which seven virtual servers Sa001 of the target system (2) are activated at 9 AM every day (only on business days) in the company A. Also, the predicted activation time (T) of the virtual server Sa001 is five minutes, and the virtual server range of dynamic scale control is 4 to 10 servers. #2 represents a target for achieving a state in which the five virtual servers Sa001 are activated at 10 AM on the first business day. The predicted activation time (T) is five minutes, and the range is fixed to five servers (no dynamic scale control). #3 represents a target for achieving a state in which the ten virtual servers Sa001 are activated at 11:30 AM on the second Monday and this is executed on the previous business day if the day is a non-business day. T is so long as 30 minutes and the range is set to 2 to 15 servers. #4 represents a target for achieving a state in which the ten virtual servers Sb001 of the target system (2) are activated at 12 AM on the fourth Monday and this is executed on the next business day if the day is a non-business day. T is set to 20 minutes, and the range is set to 2 to 15 servers. #5 represents a target for achieving a state in which five virtual servers Sa002 of the target system (2) are activated at 8:30 AM on the month-end day. T is set to 15 minutes, and the range is set to 2 to 6 servers. #6 represents a target for achieving a state in which five virtual servers Sb003 of the target system (2) are activated at 9:30 AM on the 10th of the calendar day and this is executed on the next business day if the day is a non-business day. T is set to 10 minutes, and the range is set to 2 to 10 servers. #7 and #8 similarly represent, for example, targets for achieving a state in which a specified number of the virtual servers Sc001 of the target system (2) are activated on a specified date in the different company B (illustration omitted).

The setting of the schedule definition information 52 is not always limited to a style of direct input to a table like that shown in FIG. 4. For example, definition patterns and type information may be prepared in advance in the UI unit 14 so that the setter can select and input the pattern or type.

### [Actual Schedule Information]

FIG. 5 shows an example (table) of the actual schedule information 53. This is a generation example corresponding to the contents of 51 of FIG. 3 and 52 of FIG. 4 (target year and month: for example, January 2011). In this configuration, rows corresponding to control units are arranged in the sequence of time series. The actual schedule information 53 has, as management items (columns), (a) time and date, (b) virtual server ID, (c) the number of the virtual servers, (d) authentication information, and others.

The time and date of (a) represents the time and date at which scale control is to be executed by the virtual server control unit 12 (the time and date at which the instruction (a2) is to be transmitted). The virtual server ID of (b) is identification information which specifies the virtual servers 21 to be the target of the scale control. The number of the virtual servers of (c) is the information which specifies the number of the virtual servers to be operated in the scale control. The authentication information of (d) is authentication information, which is required when the instruction (a2) of the scale control including the number of the virtual servers of (c) is transmitted to the target system (2) to control the servers, and is information such as user IDs, passwords, and others.

In FIG. 5, for example, #1 defines that the instruction (a2) is to be transmitted so as to achieve a state in which the ten target virtual servers Sa001 are activated at 8:55 (T=5 minutes) on January 3rd (the first business day (the month-beginning business day)) of FIG. 3 in accordance with #1 of FIG. 4. Since the date definition of (c) in #1 of FIG. 4 is 9 AM (target) and the predicted activation time (T) of (f) is 5 minutes, the schedule is generated in #1 of FIG. 5 so as to transmit the instruction (a2) at 8:55 which is 5 minutes before 9:00. In this manner, the actual activation state can be made closer to the target value than conventional cases. Furthermore, the above-described time and date (8:55) at which the instruction is transmitted may be set to be earlier for providing extra margin.

Similarly, #2 represents an instruction for activating the five servers Sa001 at 9:55 AM (5 minutes before the target) on the same day in accordance with #2 of FIG. 4. Like #1, #3 represents an instruction for activating seven servers Sa001 at 8:55 on January 4th in accordance with #1 of FIG. 4. #4 represents an instruction for activating the five virtual servers Sb003 at 9:20 AM (10 minutes before the target) on January 11th, which is the next business day of January 10th of FIG. 3, in accordance with #6 of FIG. 4. #5 represents an instruction for activating the ten servers Sa001 at 11:00 (30 minutes before the target) on January 14th, which is the previous business day of January 17th of FIG. 3, in accordance with #3 of FIG. 4. #6 represents an instruction for activating the ten virtual servers Sb001 at 11:40 AM (20 minutes before the target) on January 25th, which is the next business day of January 24th of FIG. 3, in accordance with #4 of FIG. 4. #7 represents an instruction for activating the five virtual servers Sa002 at 8:15 AM (15 minutes before the target) on January 31st of FIG. 3 in accordance with #5 of FIG. 4.

Even if there is a difference between the prediction and an actual result as a result of the above-described control, the difference is recorded as the monitoring information 54 and can be reflected in later scheduling. For example, the predicted activation time (T) is corrected (updated), and the time and date of the actual schedule information 53 is corrected to be forward/backward in accordance with that. Therefore, processing efficiency can be gradually improved.

As a modification example, the actual schedule information 53 may have a configuration controlled by specifying the number of the virtual servers to be activated and the number of the virtual servers to be stopped in accordance with the target system.

### [Virtual Server Activation Time]

Supplemental descriptions will be given to the activation time (T) of the virtual server. For example, in a certain public cloud A, activation (from when an instruction is given until an activation completed state is obtained) of a certain virtual server A requires 15 minutes (T=15 minutes). Internal mechanisms including activation mechanisms or the like of virtual servers are different depending on various types of public clouds, and the above-described activation time (T) is also different depending on conditions such as loads at that point. Further, the activation time (T) is different depending on the geographical position at which the facility of the public cloud is present, communication distances to clients and others. In general, the above-described activation time (T) is difficult to be predicted from outside and is indefinite.

In this system, as one of characteristics, the above-described activation time (T) is obtained (for example, the monitoring unit 13, (f) of 52 of FIG. 4) and is reflected to scheduling by the scheduler unit 11. More specifically, earlier time and date relative to the target value set by the client is generated for an actual schedule with taking the amount of the predicted activation time (T) into consideration. Thus, suitable scale control is realized, and as a result, efficient business processing and the like are realized.

### [Dynamic Scale Control]

Supplemental descriptions will be given to the dynamic scale control. The monitoring unit 13 obtains a dynamic resource state of the target system (2) by the monitoring information (a3) and records it as the monitoring information 54. As an additional function of the present system, the scheduler unit 11 can add the dynamic scale control within a predetermined range to the basic static scale control by the virtual server control unit 12 with reference to the information of the dynamic resource state of the above-described monitoring information 54 and based on the determination of the state. More specifically, in addition to the static scale control based on 51 and 52, the scheduler unit 12 carries out a process of generating the actual schedule information 53, to which the above-described dynamic scale control has been reflected. In a case in which this additional function is used (usage thereof can be selected/set by the UI unit 14), in view of the actual state (actual result) of the virtual servers 21 of the target system (2) by the static scale control at certain time/date timing, the adjustment to increase and decrease the number of the virtual servers 21 to be operated at next and following time/date timings can be made within a predetermined range. By virtue of this, the state of resources and others can be improved. Consistently, this is on the basis of the static scale control based on the actual schedule information 53, and the dynamic scale control is used as a support.

### [Effects and others]

As described above, according to the present embodiment, it is possible to ensure sufficient effects in processing efficiency and load dispersion and operability of systems and services in relation to the scale control of the virtual servers 21 and others in the target system such as the public cloud 2. The present system has a unique function of determining the actual schedule (53) for the static scale control in accordance with the calendar (51) and the schedule definition (52) of the client company, the scale of the virtual servers 21 of the target system (2) can be effectively controlled in accordance with the calendar (51) and the schedule definition (52) set by a person responsible of the client company or the like, and efficiency of the business processes and others of the client company can be improved. In the case of conventional dynamic scale control, conditions such as schedules of the client company do not match, so that processing efficiency is deteriorated in some cases, but sufficient effects and operability can be ensured by using the static scale control of the present system.

In the present system, the actual schedule (53) to which the server load (for example, load peak time/date) of the target system (2) and the activation time (T) of the virtual servers 21 have been taken into consideration and reflected can be automatically generated to realize the effective static scale control. Since the instruction (a2) of activation is transmitted at the time and date earlier by the delay (T) with respect to the target time and date, the specified number of the virtual servers can be made in the activated state at the target time and date.

In the conventional general static scale control or schedule control, the scale (for example, the number) of servers is only fixedly changed simply in accordance with a predetermined (specified) schedule (time and date), and scale control according to characteristics such as business days and non-business days of each client company and characteristics of business processes is not carried out. Therefore, the problem that efficiency of business processes of the like is lowered due to influence of loads and the activation time (T) around the opening time of particular business days cannot be well handled. On the other hand, the unique static scale control which has taken the conditions and characteristics of each client company into consideration is realized in the present embodiment, and it is possible to handle the above-described problem.

In the foregoing, the invention made by the inventors of the present invention has been concretely described based on the embodiments. However, it is needless to say that the present invention is not limited to the foregoing embodiments and various modifications and alterations can be made within the scope of the present invention.

The present invention can be utilized for a client company information processing system, a cloud computing system, an integrated monitoring system, and others.

## Claims

1. A virtual server control system that controls virtual servers operated in a target system by using information processing of a computer, the virtual server control system comprising:
a first processing unit that carries out a process of setting calendar information of a client company, which utilizes the target system, by a setter and a process of setting definition information for generating an actual schedule for scale control of the virtual servers by the setter;
a second processing unit that carries out a scheduling process of generating actual schedule information for the scale control of the virtual servers with reference to the calendar information and the definition information; and
a third processing unit that carries out a process of transmitting an instruction of the scale control to the virtual servers of the target system at specified time/date timing in accordance with a description of the actual schedule information,
wherein the calendar information includes information of business days and non-business days of the client company,
the definition information includes information of target virtual servers, time/date definition, and the number of the virtual servers of the scale control, and
the actual schedule information includes information of time and date, the target virtual servers, and the number of the virtual servers of the scale control.

2. The virtual server control system according to claim 1, further comprising:
a fourth processing unit that monitors a working and a state of the virtual servers of the target system and records monitoring information,
wherein the monitoring information includes at least either one of an actual value and a prediction value of load or resource of the virtual servers, and
the second processing unit caries out a scheduling process of generating the actual schedule information with reference to the monitoring information so as to achieve the number of the virtual servers of the scale control in consideration of the state of the load or resource of the virtual servers of the target system.

3. The virtual server control system according to claim 1, further comprising:
a fourth processing unit that monitors a working and a state of the virtual servers of the target system and records monitoring information,
wherein the monitoring information includes at least either one of an actual value and a prediction value of activation time of the virtual servers, and
the second processing unit carries out a scheduling process of generating the actual schedule information with reference to the monitoring information so as to achieve the time and date in consideration of the activation time of the virtual servers of the target system.

4. The virtual server control system according to claim 1,
wherein the time/date definition of the definition information includes information for defining a particular business day, a particular non-business day, a particular day of a week, a particular calendar day, and particular time as types and can be arbitrarily set by the setter.

5. The virtual server control system according to claim 1,
wherein the definition information includes information for defining working on a non-business day, and
the information for defining working on a non-business day includes no control execution, execution on a previous business day, and execution on a next business day as types and can be arbitrarily set by the setter.

6. The virtual server control system according to claim 1,
wherein the definition information includes information of predicted activation time of the target virtual servers and can be arbitrarily set by the setter, and
in the scheduling process, the second processing unit generates the actual schedule information so as to set the time and date earlier by the amount corresponding to the predicted activation time.

7. The virtual server control system according to claim 1, further comprising:
a fourth processing unit that monitors a working and a state of the virtual servers of the target system and records monitoring information,
wherein the definition information includes information of a virtual server range of a case in which dynamic scale control is added and can be arbitrarily set by the setter, and
when the dynamic scale control is added , the second processing unit generates the actual schedule information with reference to the monitoring information so as to carry out adjustment to increase and decrease the number of the virtual servers of the static scale control within the virtual server range in the scheduling process.

8. A virtual server control program that controls virtual servers operated in a target system by using information processing of a computer, the virtual server control program comprising:
a first program that carries out a process of setting calendar information of a client company, which utilizes the target system, by a setter and a process of setting definition information for generating an actual schedule for scale control of the virtual servers by the setter;
a second program that carries out a scheduling process of generating actual schedule information for the scale control of the virtual servers with reference to the calendar information and the definition information; and
a third program that carries out a process of transmitting an instruction of the scale control to the virtual servers of the target system at specified time/date timing in accordance with a description of the actual schedule information,
wherein the calendar information includes information of business days and non-business days of the client company,
the definition information includes information of target virtual servers, time/date definition, and the number of the virtual servers of the scale control, and
the actual schedule information includes information of time and date, the target virtual servers, and the number of the virtual servers of the scale control.
